# EUROPEAN PATENT SPECIFICATION

(11) **EP 4 496 090 B1**
(45) Date of publication and mention of the grant of the patent: **05.08.2026**
(21) Application number: 24186884.3
(22) Date of filing: 05.07.2024
(51) Int. Cl.: H01M 50/209, H01M 50/271, H01M 50/273, H01M 50/358

(54) **BATTERY PACK**
BATTERIEPACK
BLOC-BATTERIE

(30) Priority: 21.07.2023 KR 20230095339
(43) Date of publication of application: 22.01.2025
(73) Proprietor: SAMSUNG SDI CO., LTD., Giheung-gu Yongin-si, Gyeonggi-do 17084 (KR)
(72) Inventor: JEON, Du Seong, 17084 Yongin-si (KR); KIM, Myung Chul, 17084 Yongin-si (KR); KIM, Jeong Ho, 17084 Yongin-si (KR); KIM, Dong Hyeong, 17084 Yongin-si (KR)
(74) Representative: Marks & Clerk LLP

(56) References cited:
- EP-A1- 2 581 960
- US-A1- 2011 293 973
- US-A1- 2020 303 701
- US-A1- 2021 074 976
- US-B2- 8 748 021

## Description

### BACKGROUND

### 1. Field

Embodiments relate to a battery pack capable of, upon occurrence of a predetermined event in a certain battery cell, reducing propagation of heat to a cell adjacent thereto.

### 2. Description of the Related Art

A secondary battery is a battery that is chargeable and dischargeable, unlike a primary battery that is not rechargeable. A low-capacity secondary battery in which one battery cell is packaged in the form of a pack is used in portable small-sized electronic devices, such as cellular phones and camcorders, and a large-capacity secondary battery in which dozens of battery cells are connected to each other in a battery pack is widely used as power sources for driving motors in hybrid vehicles and the like.

A secondary battery may include an electrode assembly including a positive electrode plate, a negative electrode plate, and a separator between the positive and negative electrode plates. The electrode assembly and an electrolyte are accommodated in a case, and a cap plate is mounted on the case. The electrode assembly may be a wound electrode assembly or a stacked electrode assembly. In such an electrode assembly, an electrode tab may protrude in an upward or lateral direction, and a current collector may be connected to the electrode tab.

A secondary battery has recently been applied to high-output products, such as electric vehicles and energy storage systems (ESSs). In order to produce the output required for these products, a plurality of secondary batteries may be provided in the form of a battery pack.

The information disclosed in this section is provided only for enhancement of understanding of the background of the disclosure and therefore it may contain information that does not form the related art.

US 2011/293973 A1 discloses a that battery pack includes a battery module which further includes a plurality of battery cells; a housing accommodating the battery cells, the housing having a bottom plate and a plurality of side walls extending from the bottom plate; and a middle cover covering the battery module, the middle cover having a body and a coupling flange extending away from the body and located between one of the side walls and the battery module.

EP 2581960 A1 discloses a battery pack that includes at least one battery module which further includes: a plurality of battery cells arranged in a direction, each of the battery cells including a vent; and a cover covering the plurality of battery cells and including a degassing cover covering the vents; and a cover plate on the degassing cover, at least a portion of the degassing cover having a rigidity less than a rigidity of the cover plate.

US 2020/303701 A1 discloses a battery pack that has an improved vent structure to rapidly discharge gas generated in an abnormal battery cell to the outside of the battery pack.

US 8748021 B2 discloses a battery module that includes a plurality of battery cells arranged in a first direction from a first end of the battery module to a second end of the battery module. Each of the battery cells includes a case which further includes a vent, an electrode assembly housed in the case, and a terminal electrically coupled to the electrode assembly; a bus bar coupled between the terminals of adjacent battery cells of the plurality of battery cells; and a battery module cover covering the plurality of battery cells and including a degassing cover covering the vents of the plurality of battery cells, and a bus bar cover covering the terminals of the plurality of battery cells and the bus bar.

US 2021/074976 A1 discloses an energy storage module which includes: a cover member which further includes an internal receiving space configured to accommodate battery cells each including a vent; a top plate coupled to a top of the cover member and including ducts respectively corresponding to the vents of the battery cells; a top cover coupled to a top portion of the top plate and includes discharge holes located in an exhaust area and respectively corresponding to the ducts; and an extinguisher sheet located between the top cover and the top plate, and configured to emit a fire extinguishing agent at a temperature exceeding a reference temperature, and the top cover includes protrusion parts located on a bottom surface of the top cover, covering the exhaust area, and coupled to an exterior of the ducts.

### SUMMARY

Embodiments provide a battery pack capable of, upon occurrence of a predetermined event in a certain battery cell, reducing propagation of heat to a cell adjacent thereto.

A battery pack according to claim 1.

In one or more embodiments, the flange portions may be located at positions corresponding to opposite sides of vents of the battery cells.

According to the invention, the reinforcement cover further includes a plate portion covering upper surfaces of the battery cells, and in one or more embodiments, the flange portions may have a bent shape and, according to the invention, are coupled to an upper surface of the plate portion.

In one or more embodiments, the flange portions may include at least one of steel, stainless steel, or aluminum.

In one or more embodiments, the flange portions may have a thickness in a range from approximately 1 mm to approximately 2 mm.

In one or more embodiments, the reinforcement cover may further include vent protruding portions between the flange portions and corresponding to the vents of the battery cells.

In one or more embodiments, the vent protruding portions may protrude upward at positions corresponding to the positions of the vents.

In one or more embodiments, the vent protruding portions may have a thickness in a range from approximately 1 mm to approximately 2 mm.

In one or more embodiments, the reinforcement cover may further include support portions on both ends of the reinforcement cover in the width direction of the battery cells and may protrude and be spaced apart from each other in the arrangement direction of the battery cells.

In one or more embodiments, the reinforcement cover may further include ventilation portions between the support portions that protrude to a height lower than the support portions.

In one or more embodiments, each of the battery cells may include a terminal provided on a side portion thereof on which the reinforcement cover is not present.

In one or more embodiments, the battery pack may further include a heat blocking member between the battery cells and the reinforcement cover.

In one or more embodiments, each of the battery cells may include a terminal provided on an upper side thereof on which the reinforcement cover is present.

In one or more embodiments, the battery pack may further include a heat blocking member located outside of the reinforcement cover and covering the terminal of each of the battery cells.

In one or more embodiments, the width of the reinforcement cover may be smaller than the width of each of the plurality of battery cells.

At least some of the above and other features of the invention are set out in the claims.

### BRIEF DESCRIPTION OF THE DRAWINGS

The accompanying drawings, which are incorporated in this specification, illustrate embodiments and serve to further illustrate the technical ideas of the disclosure in conjunction with the detailed description of embodiments that follows, and the disclosure is not to be construed as being limited to what is shown in such drawings. In the drawings:
FIG. 1 is a perspective view of a battery pack according to an embodiment;
FIG. 2 is an exploded perspective view of the battery pack according to the embodiment;
FIG. 3 is an enlarged view of portion A in FIG. 1;
FIG. 4 is a perspective view of a battery pack according to another embodiment; and
FIG. 5 is an exploded perspective view of the battery pack according to the other embodiment.

### DETAILED DESCRIPTION

Hereinafter, embodiments will be described in detail with reference to the accompanying drawings.

Embodiments are provided to more fully illustrate the disclosure to a person having ordinary skill in the art, and the following embodiments may be modified in various other forms, and the scope of the disclosure is not limited to the following embodiments. The embodiments are provided to make the disclosure more faithful and complete and to completely convey the idea of the disclosure fully to those skilled in the art.

In the following drawings, the thickness or size of each layer is exaggerated for convenience and clarity of description, and same reference symbols in the drawings refer to the same elements. As used herein, the term "and/or" includes any one of the enumerated items and any combination of one or more thereof. As used herein, the term "connected" refers not only to direct connection between members A and B but also to indirect connection between members A and B with member C interposed therebetween.

The terms used in the specification are intended to describe specific embodiments and are not intended to limit the disclosure. As used herein, singular forms may include plural forms, unless the context clearly indicates otherwise. As used herein, the terms "comprise" (or "include") and/or "comprising" (or "including") are intended to specify the presence of stated figures, numbers, steps, operations, members, elements, and/or groups thereof and do not exclude the presence or addition of one or more other figures, numbers, steps, operations, members, elements, and/or groups thereof. Further, the use of "may" when describing embodiments may refer to "one or more embodiments."

While terms such as first and second are used herein to describe various members, parts, regions, layers, and/or portions, the members, the parts, the regions, the layers, and/or the portions are not to be limited by the terms. The terms are used only to distinguish one member, one part, one region, one layer, or one portion from another member, another part, another region, another layer, or another portion. Thus, a first member, a first part, a first region, a first layer, or a first portion hereinafter described may refer to a second member, a second part, a second region, a second layer, or a second portion without departing from the teachings of the disclosure.

Terms related to space, such as "beneath," "below," "lower," "above," and "upper," may be utilized to facilitate understanding of one element or feature shown in the drawings as different from another element or feature. The terms related to space are intended to facilitate understanding of the disclosure in various states of process or use and are not intended to limit the disclosure. For example, if an element or feature in a figure is inverted, an element or feature described as "beneath" or "below" becomes "above" or "upper." Thus, "beneath" is a concept that encompasses "above" or "below."

A battery pack may include at least one battery module and a pack housing including an accommodation space defined therein to accommodate the at least one battery module.

The battery module may include a plurality of battery cells and a module housing. The battery cells may be accommodated in the module housing in a stacked form. Each of the battery cells may include a positive electrode lead and a negative electrode lead. The battery cells may be classified as a cylindrical type, a prismatic type, and/or a pouch type, depending on the type of battery.

Instead of the battery module, one cell stack in which battery cells are stacked may constitute one module in the battery pack. The cell stack may be accommodated in the accommodation space in the pack housing or may be accommodated in an accommodation space defined by a frame, a partition wall, etc.

The battery cells may generate a large amount of heat during charging/discharging. The generated heat may accumulate in the battery cells and may accelerate deterioration of the battery cells. The battery pack may further include a cooling member in order to suppress deterioration of the battery cells. The cooling member may be disposed on the bottom of the accommodation space in which the battery cells are provided. However, the embodiments are not limited thereto. The cooling member may be disposed on the top or side surface of the accommodation space, depending on the battery pack.

Gas generated in the battery cells under an abnormal operating condition, also known as thermal runaway or a thermal event, may be discharged outside the battery cells. The battery pack or the battery module may be provided with an exhaust port for discharge of exhaust gas in order to suppress damage thereto due to exhaust gas.

The battery pack may include a battery and a battery management system (BMS) configured to manage the battery. The battery management system may include a detection device, a balancing device, and a control device.

The battery module may include a plurality of cells connected to each other in series or in parallel. A plurality of battery modules may be connected to each other in series or in parallel.

The detection device may detect the state (voltage, current, temperature, etc.) of the battery to obtain state information indicating the state of the battery. The detection device may detect the voltage of each of the cells or each of the battery modules constituting the battery. The detection device may detect the current flowing through each of the battery modules constituting the battery or the battery pack. The detection device may detect the temperature of the cells and/or the modules and/or ambient temperature at at least one point in the battery.

The balancing device may perform balancing operation on the battery modules and/or the cells constituting the battery.

The control device may receive the state information indicating the state (voltage, current, temperature, etc.) of the battery modules from the detection device. The control device may monitor and calculate the state (voltage, current, temperature, state of charge (SOC), state of health (SOH), etc.) of the battery modules based on the state information received from the detection device. In some embodiments, the control device may perform a control function (e.g., temperature control, balancing control, charging/discharging control, etc.) and a protection function (e.g., overdischarge prevention, overcharge prevention, overcurrent prevention, short circuit prevention, fire extinguishing, etc.) based on a result of monitoring the state of the battery modules. In some embodiments, the control device may perform a function of executing wired or wireless communication with an external device (e.g., an upper-level controller, a vehicle, a charger, a power conversion system (PCS), etc.) located outside the battery pack.

The control device may control charging/discharging operation and protection operation of the battery. To this end, the control device may include a charging/discharging controller, a balancing controller, and a protection unit.

The battery management system may be a system that monitors the state of the battery and performs diagnosis, control, communication, and protection functions. The battery management system may calculate the state of charge/discharge of the battery, may calculate the lifespan or the state of health (SOH) of the battery, may interrupt supply of power from the battery (perform relay control) as needed, may perform thermal management control (cooling, heating, etc.), may perform a high-voltage interlock function, and may detect or calculate insulation and short circuit states.

The relay may be a mechanical contactor that is turned on or off by a magnetic force of a coil or it may be a semiconductor switch such as a metal oxide semiconductor field effect transistor (MOSFET).

Relay control may be a function of interrupting supply of power from the battery when a problem occurs in the vehicle and/or the battery system.

One or more relays and precharge relays may be provided at each of a positive electrode terminal and a negative electrode terminal.

An in-rush current may be generated in a high-voltage capacitor on an input side of an inverter at the time of connection to the battery load. Precharge control may be a function of performing connection to a precharge resistor by operating the precharge relay before connection of the main relay in order to prevent draw of the in-rush current at the time of startup of the vehicle.

A high-voltage interlock may be a detection circuit that uses a small signal in order to check whether all high-voltage components are connected to the entire vehicle system. The high-voltage interlock function may be a function of forcibly opening the relay when any one part of the entire loop is in an open state.

Hereinafter, the configuration of a battery pack according to an embodiment will be described.

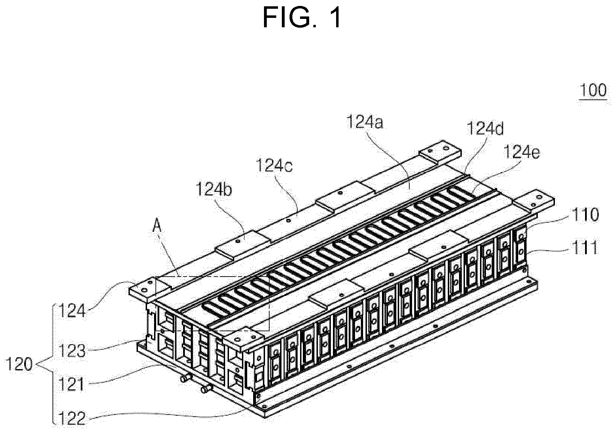

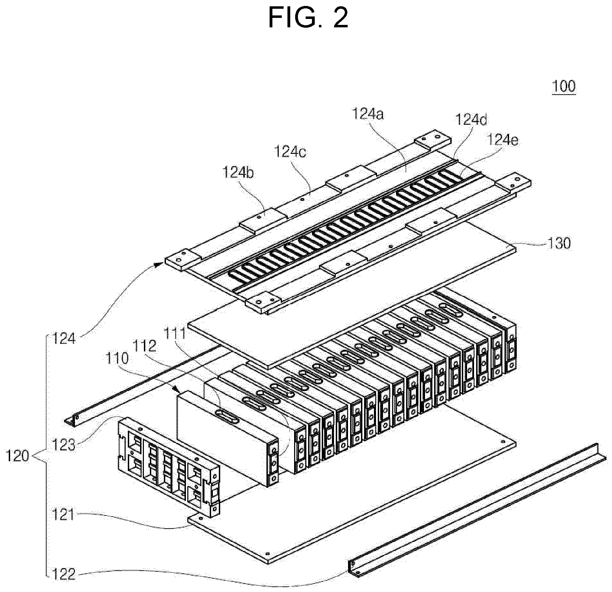

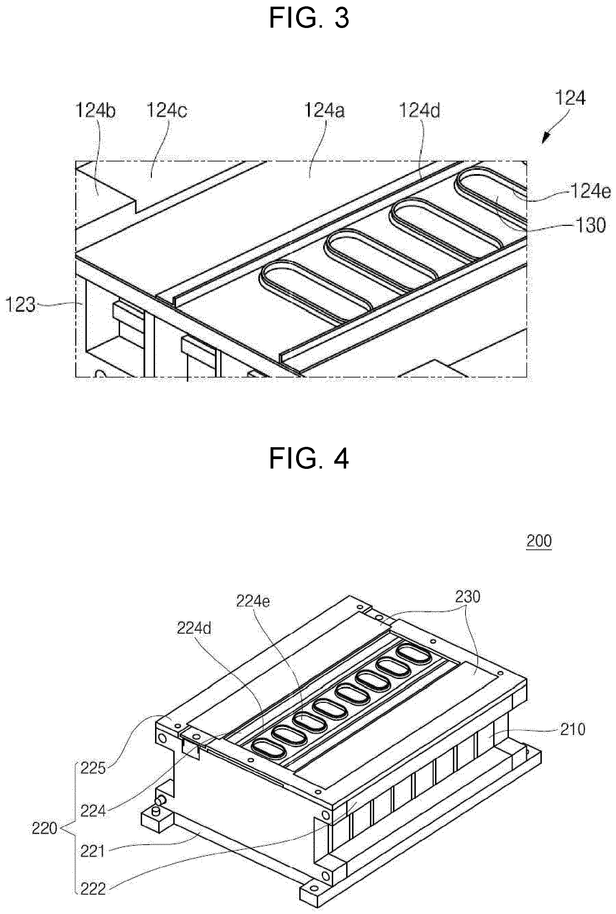

FIG. 1 is a perspective view of a battery pack according to an embodiment. FIG. 2 is an exploded perspective view of the battery pack according to the embodiment. FIG. 3 is an enlarged view of portion A in FIG. 1.

Referring to FIGs. 1 to 3, the battery pack 100 according to one embodiment may include a plurality of battery cells 110 and a cover member 120 coupled to the battery cells 110 and covering the outer surfaces of the battery cells 110. In some embodiments, the battery pack 100 may further include a heat blocking member 130 between the battery cells 110 and the cover member 120 (see Figure 2).

The plurality of battery cells 110 may be arranged in one direction as shown. Each of the battery cells 110 may include an electrode assembly. The electrode assembly may include a first electrode plate, a separator, and a second electrode plate, each of which is formed in a thin plate shape or a membrane shape. The first electrode plate, the separator, and the second electrode plate may be stacked or wound. In some embodiments, the first electrode plate may be a negative electrode, and the second electrode plate may be a positive electrode. In other embodiments, the first electrode plate may be a positive electrode, and the second electrode plate may be a negative electrode.

The first electrode plate may be formed by applying a first electrode active material, such as graphite or carbon, to a first electrode current collector formed as a metal foil made of copper or nickel, and may include a first electrode uncoated portion, which is an area to which the first electrode active material is not applied. The first electrode uncoated portion may provide a passage for the flow of current between the first electrode plate and the outside.

The second electrode plate may be formed by applying a second electrode active material, such as a transition metal oxide, to a second electrode current collector formed as a metal foil made of aluminum, and may include a second electrode uncoated portion, which is an area to which the second electrode active material is not applied.

The separator may be between the first electrode plate and the second electrode plate to prevent a short circuit and to enable the movement of lithium ions. The separator may be a film made of polyethylene, polypropylene, or a combination thereof.

The electrode assembly may be accommodated in a case together with an electrolyte (optional). The electrolyte may include an organic solvent such as ethylene carbonate (EC), propylene carbonate (PC), diethyl carbonate (DEC), ethyl methyl carbonate (EMC), or dimethyl carbonate (DMC) and a lithium salt such as LiPF₆ or LiBF₄.

The case may be sealed by a component such as a cap plate or a side plate. FIG. 1 illustrates an embodiment in which the case is sealed by a side plate, and electrode terminals 111, which are coupled to the first electrode plate and the second electrode plate, are formed on both sides of the side plate. In one or more embodiments, the electrode terminals 111 may protrude from both sides (e.g., opposite sides) of the case.

In one or more embodiments, each of the battery cells 110 may include a vent 112 in an upper surface thereof. The vent 112 may be thinner than the other regions of the battery cell 110 and thus may be configured to be opened (to rupture) earlier than the other regions of the battery cell 110 when an internal pressure in the battery cell 110 is equal to or higher than a reference pressure. The vent 112 may serve to guide internal gas in the battery cell 110 to be discharged to the outside in response to the internal pressure in the battery cell 110 being equal to or higher than the reference pressure, thereby preventing an accident such as an explosion.

In the battery pack 100, structures such as bus bars may be provided for electrical connection between the battery cells through the electrode terminals 111 formed on the side portions of the battery cells. In an embodiment in which the vent 112 is in the upper surface of the battery cell 110, the structures typically will not be affected by opening of the vent 112 of the battery cell 110.

In one or more embodiments, a spacer may be between every two adjacent ones of the battery cells 110. The spacer may serve to allow adjacent battery cells to be electrically isolated from each other and to block propagation of heat from one battery cell to another battery cell adjacent thereto.

The cover member 120 may surround the battery cells 110 to protect the battery cells 110 from external impact. The cover member 120 may include a lower cover 121 under the battery cells 110, side covers 122 along the side surfaces of the battery cells 110, end covers 123 coupled to the foremost (frontmost) and rearmost battery cells among the battery cells 110, and a reinforcement cover 124 over or on the battery cells 110. In some embodiments, these covers may be referred to as plates.

The lower cover 121 may extend along surfaces of the plurality of battery cells 110, for example, the lower surfaces of the battery cells 110. The lower cover 121 may support loads of the battery cells 110 and the heat blocking member 130. The lower cover 121 may also be configured to dissipate heat generated in the battery cells 110 through the lower surface of the battery pack 100.

The side covers 122 may be above the lower cover 121 and may be coupled to both side surfaces of the battery cells 110 in the direction in which the battery cells 110 are arranged, thereby fixing the positions of the battery cells 110.

The electrode terminals 111 of the battery cells 110 may be exposed through the side covers 122, and separate bus bars may be coupled to the electrode terminals 111 to electrically connect the battery cells 110 to each other.

The end covers 123 may be coupled to the foremost (frontmost) and rearmost battery cells among the battery cells 110. The end covers 123 may fix the positions of the battery cells 110 and press the foremost (frontmost) and rearmost battery cells among the battery cells 110. The end covers 123 may be coupled to the lower cover 121, the side covers 122, and the reinforcement cover 124, and the battery cells 110 may be accommodated in an internal space defined by these covers 121, 122, 123, and 124.

The reinforcement cover 124 is coupled to the upper surfaces of the battery cells 110. The reinforcement cover 124 may protect the upper surfaces of the battery cells 110 and provide mechanical rigidity thereto. The reinforcement cover 124 may be made of steel. In other embodiments, the reinforcement cover 124 may be made of stainless steel or aluminum.

The reinforcement cover 124 may include open holes in regions corresponding to the vents of the battery cells 110. Because the reinforcement cover 124 does not interfere with the vents due to the open holes in the reinforcement cover 124, operation of the vents of the battery cells 110 typically will not be inhibited.

According to the invention, the reinforcement cover 124 includes a plate portion 124a and may further include support portions 124b on both edges of the plate portion 124a and arranged in the longitudinal direction of the plate portion 124a, ventilation portions 124c on both edges of the plate portion 124a and arranged in the longitudinal direction of the plate portion 124a, two rows of flange portions 124d at the central part of the plate portion 124a and spaced apart from each other in the width direction of the plate portion 124a, and vent protruding portions 124e between the flange portions 124d and corresponding to the vents 112 of the battery cells 110.

The plate portion 124a may have a substantially flat shape and may completely (or substantially completely) cover the upper surfaces of the battery cells 110.

The support portions 124b may be on both edges of the plate portion 124a and may be arranged in the longitudinal direction of the plate portion 124a. The support portions 124b may be spaced apart from each other and may protrude farther upward than the plate portion 124a. The ventilation portions 124c may be between the support portions 124b along both edges of the plate portion 124a and may protrude farther upward than the plate portion 124a. The ventilation portions 124c may be lower than the support portions 124b in order to allow gases generated upon occurrence of an event in the battery cell 110 to move along the ventilation portions 124c on the upper surface of the plate portion 124a. Gas movement passages defined by the ventilation portions 125c may be on the upper surface of the plate portion 124a in the longitudinal direction of the plate portion 124a in the width direction of the plate portion 124a perpendicular to the longitudinal direction thereof, and thus gases may be easily moved and discharged to the outside of the battery pack 100.

The flange portions 124d is arranged in two rows at the central part of the plate portion 124a in order to provide rigidity to the reinforcement cover 124. The flange portions 124d are separate components and they may each have, or they may be formed to be bent in, a substantially L-shape. The flange portions 124d is be coupled to the plate portion 124a. The flange portions 124d having this L-shape may more reliably provide rigidity to the entirety of the reinforcement cover 124 and may prevent (or at least mitigate) sagging of the reinforcement cover 124.

In one or more embodiments, the flange portions 124d may have a thickness of about (approximately) 1 mm to about (approximately) 2 mm. If the thickness of the flange portions 124d is equal to or greater than 1 mm, it may be possible to achieve the required rigidity, and if the thickness of the flange portions 124d is equal to or less than 2 mm, it may be suitable for reduction of the overall weight of the battery pack 100.

The vent protruding portions 124e may be located at positions corresponding to the positions of the respective vents 112 of the battery cells 110. The vent protruding portions 124e may provide rigidity to the peripheries of the vents 112 of the battery cells 110. The vent protruding portions 124e may protrude upward along the peripheries of the vents 112, which are formed in the upper surfaces of the battery cells 110 so as to have a relatively small thickness, thereby protecting the vents 112 from external forces that may be applied to the vents 112.

The vent protruding portions 124e may expose the vents 112 through the open holes formed therein, and thus will not disturb or inhibit operation of the vents 112 upon the occurrence of an event.

The vent protruding portions 124e may have a thickness of about (approximately) 1 mm to about (approximately) 2 mm. If the thickness of the vent protruding portions 124e is equal to or greater than 1 mm, it may be possible to achieve the required rigidity, and if the thickness of the vent protruding portions 124e is equal to or less than 2 mm, it may be suitable for reduction of the overall weight of the battery pack 100.

The heat blocking member 130 may be between the battery cells 110 and the reinforcement cover 124. The heat blocking member 130 may cover the upper surfaces of the battery cells 110 in which the vents 112 are formed. In an event in which the vent 112 of any one of the battery cells 110 is opened, a high-temperature substance may be discharged out of the corresponding battery cell. If this high-temperature substance scatters to a neighboring battery cell 110, for example, onto the vent of a neighboring battery cell 110, which is vulnerable to heat, the vent 112 of the neighboring battery cell 110 may be opened. This may result in a problem in which an event occurring in a certain battery cell 110 propagates to another battery cell 110 adjacent thereto. Because the heat blocking member 130 covers the outer sides of the upper surfaces of the battery cells 110 in which the vents 112 are formed, the heat blocking member 130 may prevent the high-temperature substance scattering from any one of the battery cells 110 from coming into direct contact with another battery cell 110. In some embodiments, the heat blocking member 130 may be on the outer surfaces of the battery cells 110 and cover the vents 112 of the battery cells 110, and thus the heat blocking member 130 may protect the vents 112, which are relatively vulnerable to heat, from the high-temperature scattering substance.

The heat blocking member 130 may block (or at least mitigate against) the transfer of heat from the high-temperature substance scattering from any one of the battery cells 110 to another battery cell 110.

The heat blocking member 130 may be configured to be opened along with the opening of the vent 112 when the vent 112 is operated by the internal pressure in the corresponding battery cell 110. In this manner, the heat blocking member 130 may protect the battery cells 110 from the high-temperature scattering substance without disturbing or inhibiting operation of the vents 112. In one or more embodiments, the heat blocking member 130 may be, or may include, for example, a mica sheet.

In some embodiments, the mica sheet may have a thickness of about (approximately) 0.1 mm to about (approximately) 2 mm. If the thickness of the mica sheet is equal to or greater than 0.1 mm, it may be possible to secure required rigidity, and if the thickness of the mica sheet is equal to or less than 2 mm, it may be suitable for reduction of the overall weight of the battery pack 100.

As described above, in the battery pack 100 according to one embodiment including the reinforcement cover 124 covering the battery cells 110, gases generated upon the occurrence of an event in the battery cell 110 may move in the longitudinal and width directions of the plate portion 124a through the support portions 124b and the ventilation portions 124c formed in the longitudinal direction of the plate portion 124a, and the rigidity of the reinforcement cover 124 may be secured by the flange portions 124d arranged in two rows at the central part of the plate portion 124a. The vent protruding portions 124e of the reinforcement cover 124 that are located at positions corresponding to the positions of the respective vents 112 of the battery cells 110 may protect the vents 112 and may provide rigidity to the vents 112.

Hereinafter, the configuration of a battery pack according to another embodiment will be described.

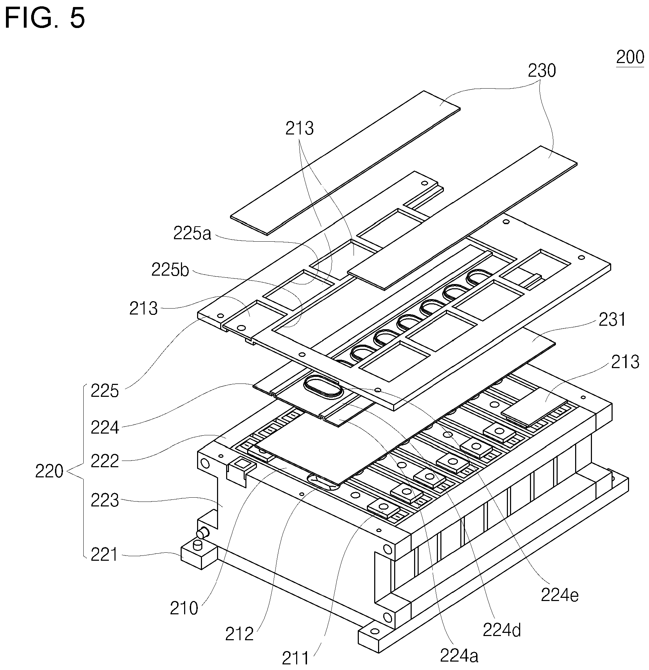

FIG. 4 is a perspective view of a battery pack 200 according to another embodiment. FIG. 5 is an exploded perspective view of the battery pack 200 according to the other embodiment.

Referring to FIGs. 4 and 5, the battery pack 200 according to the other embodiment may include a plurality of battery cells 210 and a cover member 220 coupled to the battery cells 210 and covering the outer surfaces of the battery cells 210. The battery pack 200 according to the other embodiment may further include heat blocking members 230 on the cover member 220. Components similar to those of the above-described embodiment are denoted by similar reference numerals, and differences therebetween will be mainly described below.

Each of the battery cells 210 may include electrode terminals 211 on the upper surface thereof and a vent 212 located between the electrode terminals 211. Unlike the previously-described embodiment, both the electrode terminals 211 and the vent 212 are on the upper surface of each of the battery cells 210, for example on predetermined regions on the upper surface.

The cover member 220 may include a lower cover 221 under the battery cells 210, side covers 222 along the side surfaces of the battery cells 210, end covers 223 coupled to the foremost (frontmost) and rearmost battery cells among the battery cells 210, a reinforcement cover 224 on or over the battery cells 210, and an upper cover 225 on the reinforcement cover 224.

In some embodiments, the lower cover 221 may extend along surfaces of the plurality of arranged battery cells 210, for example, the lower surfaces of the battery cells 210. The side covers 222 may be on the lower cover 221 and may be coupled to both side surfaces of the battery cells 210 in the direction in which the battery cells 210 are arranged. The end covers 223 may be coupled to the foremost (frontmost) and rearmost battery cells among the battery cells 210, thereby fixing the positions of the battery cells 210 and pressing the foremost (frontmost) and rearmost battery cells among the battery cells 210.

The reinforcement cover 224 may be coupled to the upper surfaces of the battery cells 210. The reinforcement cover 224 may be configured to protect the upper surfaces of the battery cells 210 and to provide mechanical rigidity thereto.

The reinforcement cover 224 typically does not cover the electrode terminals 211, but may cover the central regions of the upper surfaces of the battery cells 210 in which the vents 212 are formed.

In some embodiments, the width of the reinforcement cover 224 may be smaller than the width of each of the battery cells 210. Thus, the electrode terminals 211 may be exposed to the outside of the reinforcement cover 224 and may be used for electrical connection using bus bars.

The reinforcement cover 224 may include open holes formed in regions thereof corresponding to the vents 212 of the battery cells 210. Because the reinforcement cover 224 does not interfere with the vents 212 due to the open holes in the reinforcement cover 224, operation of the vents 212 of the battery cells 210 typically will not be inhibited.

In some embodiments, the reinforcement cover 224 may include a plate portion 224a, two rows of flange portions 224d at the central part of the plate portion 224a and spaced apart from each other in the width direction of the plate portion 224a, and vent protruding portions 224e between the flange portions 224d and located to correspond (e.g., match) the vents 212 of the battery cells 210.

The flange portions 224d may be arranged in two rows at the central part of the plate portion 224a in order to provide rigidity to the reinforcement cover 224. The flange portions 224d may each have a substantially L-shape, like the above-described embodiment. In other embodiments, the flange portions 224d may be integrally formed with the plate portion 224a by, for example, bending the plate portion 224a so as to protrude in a substantially U-shape.

The flange portions 224d may have a thickness of about (approximately) 1 mm to about (approximately) 2 mm. If the thickness of the flange portions 224d is equal to or greater than 1 mm, it may be possible to achieve the required rigidity, and if the thickness of the flange portions 224d is equal to or less than 2 mm, it may be suitable for reduction of the overall weight of the battery pack 200.

The vent protruding portions 224e may be at positions corresponding to the positions of the respective vents 212 of the battery cells 210. The vent protruding portions 224e may provide rigidity to the peripheries of the vents 212 of the battery cells 210. The vent protruding portions 224e may expose the vents 212 through the open holes formed therein, and thus typically will not disturb or inhibit operation of the vents 212 upon occurrence of an event.

The vent protruding portions 224e may have a thickness of about (approximately) 1 mm to about (approximately) 2 mm. If the thickness of the vent protruding portions 224e is equal to or greater than 1 mm, it may be possible to achieve the required rigidity, and if the thickness of the vent protruding portions 224e is equal to or less than 2 mm, it may be suitable for reduction of the overall weight of the battery pack 100.

The heat blocking members 230 may be on or above the reinforcement cover 224. The heat blocking members 230 may be coupled to the regions of the upper cover 225 that correspond to the electrode terminals 211 of the battery cells 210 that are exposed to the outside of the reinforcement cover 224. In some embodiments, the battery pack 200 may further include a heat blocking member 231 between the plurality of battery cells 210 and the reinforcement cover 224 similar to that shown in FIG. 2.

In some embodiments, after bus bars 213 are coupled to the upper sides of the electrode terminals 211 of the battery cells 210, the heat blocking members 230 may be placed so as to cover the upper sides of the electrode terminals 211 and the bus bars 213. The heat blocking members 230 and 231 may prevent (or at least mitigate) a high-temperature substance generated upon occurrence of an event in any one of the battery cells 210 from scattering to and coming into contact with another battery cell 210 adjacent thereto, thereby blocking (or at least mitigating against) propagation of the event or heat to the other battery cell 210.

In some embodiments, the upper cover 225 may include a plurality of openings 225a arranged at both edges and one opening 225b arranged in the center. The bus bars 213 may be located in the openings 225a and may be electrically connected to the terminals of the battery cell 210. The heat blocking member 231 and the reinforcement cover 224 may be positioned through the opening 225b and placed on the battery cell 210.

As described above, in the battery pack 200 according to the embodiment of Figures 4 and 5, including the reinforcement cover 224 covering the battery cells 210, the rigidity of the reinforcement cover 224 may be achieved by the flange portions 224d arranged in two rows at a central part of the plate portion 224a in the longitudinal direction of the plate portion 224a. The vent protruding portions 224e of the reinforcement cover 224 that are located at positions corresponding to the positions of the respective vents 212 of the battery cells 210 may protect the vents 212 and may provide rigidity to the vents 212.

As is apparent from the above description, a battery pack according to an embodiment may include a reinforcement cover covering battery cells. Gases generated upon occurrence of an event in a battery cell may move in the longitudinal and width directions of a plate portion of the reinforcement cover through support portions and ventilation portions formed in the longitudinal direction of the plate portion, and the rigidity of the reinforcement cover may be achieved by flange portions arranged in two rows at the central part of the plate portion.

The reinforcement cover may include vent protruding portions located at positions corresponding to the positions of vents of the battery cells, thereby protecting the vents and providing rigidity to the vents.

## Claims

1. A battery pack (100) comprising:
a plurality of battery cells (110); and
a cover member (120) configured to cover the plurality of battery cells (110), the cover member (120) comprising a reinforcement cover (124) on the plurality of battery cells (110),
wherein the reinforcement cover (124) comprises a plate portion (124a) covering upper surfaces of the plurality of battery cells (110), and flange portions (124d) arranged in two rows at a central portion of the reinforcement cover (124) and extending in an arrangement direction of the plurality of battery cells (110),
wherein each of the flange portions (124d) is a separate component and is coupled to an upper surface of the plate portion (124a).

2. The battery pack (100) as claimed in claim 1, wherein the flange portions (124d) are located at positions corresponding to opposite sides of vents (112) of the plurality of battery cells (110).

3. The battery pack (100) as claimed in claim 1 or claim 2, wherein each of the flange portions (124d) has a bent shape.

4. The battery pack (100) as claimed in any one of the preceding claims, wherein the flange portions (124d) comprise at least one of steel, stainless steel, or aluminum.

5. The battery pack (100) as claimed in any one of the preceding claims, wherein the flange portions (124d) have a thickness in a range from approximately 1 mm to approximately 2 mm.

6. The battery pack (100) as claimed in any one of the preceding claims, wherein the reinforcement cover (124) further comprises vent protruding portions (124e) between the flange portions (124d) and corresponding to vents (112) of the plurality of battery cells (110).

7. The battery pack (100) as claimed in claim 6, wherein the vent protruding portions (124e) protrude upward at positions corresponding to positions of the vents (112).

8. The battery pack (100) as claimed in claim 6 or claim 7, wherein the vent protruding portions (124e) have a thickness in a range from approximately 1 mm to approximately 2 mm.

9. The battery pack (100) as claimed in any one of the preceding claims, wherein the reinforcement cover (124) further comprises support portions (124b) on both ends of the reinforcement cover (124) in a width direction of the plurality of battery cells (110), the support portions (124b) being arranged along and spaced apart from each other in the arrangement direction of the plurality of battery cells (110).

10. The battery pack (100) as claimed in claim 9, wherein the reinforcement cover (124) further comprises ventilation portions (124c) between the support portions (124b), the ventilation portions (124c) protruding to a height lower than the support portions (124b).

11. The battery pack (100) as claimed in any one of the preceding claims, wherein each battery cell of the plurality of battery cells (110) comprises a terminal (111) on a side portion of the each battery cell, and wherein the reinforcement cover (124) is not on the side portion.

12. The battery pack (100) as claimed in any one of the preceding claims, further comprising a heat blocking member (130) between the plurality of battery cells (110) and the reinforcement cover (124).

13. The battery pack (200) as claimed in any one of the preceding claims, wherein each battery cell of the plurality of battery cells (210) comprises a terminal (211) on an upper side of the each battery cell, and wherein the reinforcement cover (224) is on the upper side of the each battery cell.

14. The battery pack (200) as claimed in claim 13, further comprising a heat blocking member (230) outside the reinforcement cover (224) and covering the terminal (211) of each battery cell.

15. The battery pack (200) as claimed in claim 13 or claim 14, wherein a width of the reinforcement cover (224) is smaller than a width of the each battery cell.

## Patentansprüche

1. Batteriepaket (100), umfassend:
eine Vielzahl von Batteriezellen (110) und
ein Abdeckelement (120), das so konfiguriert ist, dass es die Vielzahl von Batteriezellen (110) abdeckt, wobei das Abdeckelement (120) eine Verstärkungsabdeckung (124) auf der Vielzahl von Batteriezellen (110) umfasst,
wobei die Verstärkungsabdeckung (124) einen Plattenabschnitt (124a), der obere Flächen der Vielzahl von Batteriezellen (110) abdeckt, und Flanschabschnitte (124d), die in zwei Reihen an einem Mittelabschnitt der Verstärkungsabdeckung (124) angeordnet sind und sich in einer Anordnungsrichtung der Vielzahl von Batteriezellen (110) erstrecken, umfasst,
wobei jeder der Flanschabschnitte (124d) ein separates Bauteil ist und mit einer oberen Fläche des Plattenabschnitts (124a) verbunden ist.

2. Batteriepaket (100) nach Anspruch 1, wobei sich die Flanschabschnitte (124d) an Positionen befinden, die gegenüberliegenden Seiten von Entlüftungsöffnungen (112) der Vielzahl von Batteriezellen (110) entsprechen.

3. Batteriepaket (100) nach Anspruch 1 oder Anspruch 2, wobei jeder der Flanschabschnitte (124d) eine gebogene Form aufweist.

4. Batteriepaket (100) nach einem der vorstehenden Ansprüche, wobei die Flanschabschnitte (124d) zumindest eines von Stahl, Edelstahl oder Aluminium umfassen.

5. Batteriepaket (100) nach einem der vorstehenden Ansprüche, wobei die Flanschabschnitte (124d) eine Dicke in einem Bereich von etwa 1 mm bis etwa 2 mm aufweisen.

6. Batteriepaket (100) nach einem der vorstehenden Ansprüche, wobei die Verstärkungsabdeckung (124) weiter vorstehende Entlüftungsabschnitte (124e) zwischen den Flanschabschnitten (124d) und entsprechend Entlüftungsöffnungen (112) der Vielzahl von Batteriezellen (110) umfasst.

7. Batteriepaket (100) nach Anspruch 6, wobei die vorstehenden Entlüftungsabschnitte (124e) an Positionen, die Positionen der Entlüftungsöffnungen (112) entsprechen, nach oben vorstehen.

8. Batteriepaket (100) nach Anspruch 6 oder Anspruch 7, wobei die vorstehenden Entlüftungsabschnitte (124e) eine Dicke in einem Bereich von etwa 1 mm bis etwa 2 mm aufweisen.

9. Batteriepaket (100) nach einem der vorstehenden Ansprüche, wobei die Verstärkungsabdeckung (124) weiter an beiden Enden der Verstärkungsabdeckung (124) in einer Breitenrichtung der Vielzahl von Batteriezellen (110) Stützabschnitte (124b) umfasst, wobei die Stützabschnitte (124b) entlang der Anordnungsrichtung der Vielzahl von Batteriezellen (110) angeordnet und in derselben voneinander beabstandet sind.

10. Batteriepaket (100) nach Anspruch 9, wobei die Verstärkungsabdeckung (124) weiter Belüftungsabschnitte (124c) zwischen den Stützabschnitten (124b) umfasst, wobei die Belüftungsabschnitte (124c) bis zu einer Höhe, niedriger als die Stützabschnitte (124b), vorstehen.

11. Batteriepaket (100) nach einem der vorstehenden Ansprüche, wobei jede Batteriezelle der Vielzahl von Batteriezellen (110) einen Anschluss (111) an einem Seitenabschnitt der jeweiligen Batteriezelle umfasst und wobei sich die Verstärkungsabdeckung (124) nicht an dem Seitenabschnitt befindet.

12. Batteriepaket (100) nach einem der vorstehenden Ansprüche, weiter umfassend ein Wärmeblockierungselement (130) zwischen der Vielzahl der Batteriezellen (110) und der Verstärkungsabdeckung (124).

13. Batteriepaket (200) nach einem der vorstehenden Ansprüche, wobei jede Batteriezelle der Vielzahl von Batteriezellen (210) einen Anschluss (211) auf einer Oberseite der jeweiligen Batteriezelle umfasst und wobei sich die Verstärkungsabdeckung (224) auf der Oberseite der jeweiligen Batteriezelle befindet.

14. Batteriepaket (200) nach Anspruch 13, weiter umfassend ein Wärmeblockierungselement (230) außerhalb der Verstärkungsabdeckung (224) und den Anschluss (211) jeder Batteriezelle abdeckend.

15. Batteriepaket (200) nach Anspruch 13 oder Anspruch 14, wobei eine Breite der Verstärkungsabdeckung (224) kleiner ist als eine Breite der jeweiligen Batteriezelle.

## Revendications

1. Bloc-batterie (100) comprenant :
une pluralité de cellules de batterie (110) ; et
un élément de couverture (120) configuré pour recouvrir la pluralité de cellules de batterie (110), l'élément de couverture (120) comprenant un couvercle de renfort (124) sur la pluralité de cellules de batterie (110),
dans lequel le couvercle de renfort (124) comprend une partie de plaque (124a) recouvrant les surfaces supérieures de la pluralité de cellules de batterie (110), et des parties formant bride (124d) disposées sur deux rangées dans une partie centrale du couvercle de renfort (124) et s'étendant dans la direction d'agencement de la pluralité de cellules de batterie (110),
dans lequel chacune des parties formant bride (124d) est un composant séparé et est couplée à une surface supérieure de la partie de plaque (124a).

2. Bloc-batterie (100) selon la revendication 1, dans lequel les parties formant bride (124d) sont situées à des positions correspondant aux côtés opposés des évents (112) de la pluralité de cellules de batterie (110).

3. Bloc-batterie (100) selon la revendication 1 ou la revendication 2, dans lequel chacune des parties formant bride (124d) présente une forme pliée.

4. Bloc-batterie (100) selon l'une quelconque des revendications précédentes, dans lequel les parties formant bride (124d) comprennent au moins un matériau parmi l'acier, l'acier inoxydable ou l'aluminium.

5. Bloc-batterie (100) selon l'une quelconque des revendications précédentes, dans lequel les parties formant bride (124d) présentent une épaisseur comprise entre environ 1 mm et environ 2 mm.

6. Bloc-batterie (100) selon l'une quelconque des revendications précédentes, dans lequel le couvercle de renfort (124) comprend en outre des parties saillantes d'aération (124e) entre les parties formant bride (124d) et correspondant aux évents (112) de la pluralité de cellules de batterie (110).

7. Bloc-batterie (100) selon la revendication 6, dans lequel les parties saillantes de ventilation (124e) font saillie vers le haut à des positions correspondant aux positions des évents (112).

8. Bloc-batterie (100) selon la revendication 6 ou la revendication 7, dans lequel les parties saillantes de ventilation (124e) présentent une épaisseur comprise entre environ 1 mm et environ 2 mm.

9. Bloc-batterie (100) selon l'une quelconque des revendications précédentes, dans lequel le couvercle de renfort (124) comprend en outre des parties de support (124b) aux deux extrémités du couvercle de renfort (124) dans le sens de la largeur de la pluralité de cellules de batterie (110), les parties de support (124b) étant agencées le long et espacées les unes des autres dans le sens d'agencement de la pluralité de cellules de batterie (110).

10. Bloc-batterie (100) selon la revendication 9, dans lequel le couvercle de renfort (124) comprend en outre des parties de ventilation (124c) entre les parties de support (124b), les parties de ventilation (124c) faisant saillie à une hauteur inférieure à celle des parties de support (124b).

11. Bloc-batterie (100) selon l'une quelconque des revendications précédentes, dans lequel chaque cellule de batterie de la pluralité de cellules de batterie (110) comprend une borne (111) sur une partie latérale de chaque cellule de batterie, et dans lequel le couvercle de renfort (124) n'est pas sur la partie latérale.

12. Bloc-batterie (100) selon l'une quelconque des revendications précédentes, comprenant en outre un élément de blocage thermique (130) entre la pluralité de cellules de batterie (110) et le couvercle de renfort (124).

13. Bloc-batterie (200) selon l'une quelconque des revendications précédentes, dans lequel chaque cellule de batterie de la pluralité de cellules de batterie (210) comprend une borne (211) sur une face supérieure de chaque cellule de batterie, et dans lequel le couvercle de renfort (224) est sur la face supérieure de chaque cellule de batterie.

14. Bloc-batterie (200) selon la revendication 13, comprenant en outre un élément de blocage thermique (230) à l'extérieur du couvercle de renfort (224) et recouvrant la borne (211) de chaque cellule de batterie.

15. Bloc-batterie (200) selon la revendication 13 ou la revendication 14, dans lequel la largeur du couvercle de renfort (224) est inférieure à la largeur de chaque cellule de batterie.
